Europäisches Patentamt

(19) European Patent Office

Office européen des brevets

(11) EP 0 692 513 B1

## (12) EUROPÄISCHE PATENTSCHRIFT

(45) Veröffentlichungstag und Bekanntmachung des Hinweises auf die Patenterteilung:
**20.08.1997  Patentblatt 1997/34**

(51) Int Cl.[6]: **C08G 77/34**, C08G 77/06

(21) Anmeldenummer: **95109671.8**

(22) Anmeldetag: **22.06.1995**

(54) **Verfahren zum Stabilisieren von Organopolysiloxanen**

Process for stabilising organopolysiloxanes

Procédé de stabilisation d'organopolysiloxanes

(84) Benannte Vertragsstaaten:
**BE DE ES FR GB IT NL**

(30) Priorität: **29.06.1994  DE 4422813**

(43) Veröffentlichungstag der Anmeldung:
**17.01.1996  Patentblatt 1996/03**

(73) Patentinhaber: **Wacker-Chemie GmbH**
**81737 München (DE)**

(72) Erfinder:
- **Hager, Rudolf, Dr.**
  **D-84503 Altötting (DE)**
- **Braun, Rudolf, Dr.**
  **D-84556 Kastl (DE)**
- **Schneider, Otto, Dr.**
  **D-84489 Burghausen (DE)**
- **Deubzer, Bernward, Dr.**
  **D-84489 Burghausen (DE)**

(74) Vertreter: **Budczinski, Angelika et al**
**c/o Wacker-Chemie GmbH,**
**Hanns-Seidel-Platz 4**
**81737 München (DE)**

(56) Entgegenhaltungen:
**EP-A- 0 311 766**          **DE-A- 3 441 353**
**DE-A- 3 533 028**          **DE-C- 859 672**
**GB-A- 1 049 188**

- **DATABASE WPI Week 8049, Derwent Publications Ltd., London, GB; AN 80-87296C & JP-A-55 136 106 (OTSUKA KAGAKU YAKUHIN) 24. Oktober 1980**
- **Ullmanns Encyclopädie der technischen Chemie; 4.Aufl./Bd. 2, Verfahrenstechnik I [1972], Verlag Chemie, Weinheim; Seiten 609-610**
- **DATABASE WPI Week 8049, Derwent Publications Ltd., London, GB; AN 80-87296C & JP-A-55 136 106**

## Beschreibung

Die Erfindung betrifft ein Verfahren zum Stabilisieren von Organopolysiloxanen, welche durch Kondensation und/ oder Äquilibrierung von Si-gebundenen Sauerstoff aufweisenden Organosiliciumverbindungen in Gegenwart von Phosphazenen bzw. deren Umsetzungsprodukten hergestellt worden sind, wobei diese mit adsorptiv wirkenden Feststoffen ausgewählt aus Aktivkohlen, Rußen, Kieselgelen und Bleicherden in Kontakt gebracht werden.

Organopolysiloxane, welche durch Kondensation und/oder Äquilibrierung von Si-gebundenen Sauerstoff enthaltenden Organosiliciumverbindungen in Gegenwart von Phosphazenen als Katalysatoren hergestellt worden sind, verändern im allgemeinen im Laufe der Lagerung ihr Molekulargewicht und damit ihre Viskosität, wenn die Phosphazene nicht nach der Reaktion desaktiviert bzw. entfernt werden. Beispielsweise aus US 3,398,176 A (ausgegeben am 20. August 1968, Wacker-Chemie GmbH) ist es bekannt, Phosphazene, dort als Phosphornitridchloride bezeichnet, durch Umsetzung mit tertiären Aminen zu desaktivieren. Die GB-A-1049188 (veröffentlicht am 23.11.1966) beschreibt ein Verfahren zur Herstellung von Organopolysiloxanen mit Phosphor-Stickstoffverbindungen als Katalysatoren, wobei nach der Umsetzung der Katalysator durch Hitzebehandlung, Neutralisation oder durch Absorption an einen Molekularsieb inaktiv gemacht wird. In DE 34 28 581 A (offengelegt am 13. Februar 1986, Wacker-Chemie GmbH) ist die Stabilisierung von mit Phosphazenen hergestellten Organopolysiloxanen mit basischen Lithiumverbindungen, wie Lithiumhydroxid oder Lithiumsiloxanolaten, beschrieben. DE 37 42 069 A (offengelegt am 22. Juni 1989, Wacker-Chemie GmbH) ist ein Beispiel für die in zahlreichen Patenten beschriebene Desaktivierung von Phosphazen-Katalysatoren mit Silazanen, z.B. Hexamethyldisilazan oder 1,3-Divinyl-1,1,3,3-tetramethyldisilazan. Eine weitere Methode zur Stabilisierung von Organopolysiloxanen, die mit Phosphazenkatalysatoren hergestellt worden sind, ist die Umsetzung mit Oxiden, Hydroxiden oder Carbonaten zwei- und dreiwertiger Metalle, z.B. Magnesiumoxid, die in DE 35 33 028 A (offengelegt am 19. März 1987, Wacker-Chemie GmbH) beschrieben ist. Aus EP 0 117 503 B (ausgegeben am 13. Mai 1987, Wacker-Chemie GmbH) ist bekannt, Phosphazenkatalysatoren mit Epoxiden zu desaktivieren.

Bei allen genannten Verfahren zur Stabilisierung von mit Phosphazenen bzw. Phosphornitridchloriden hergestellten Organopolysiloxanen werden Verbindungen eingesetzt, die mit den sauer reagierenden Katalysatoren abreagieren. Mit Ausnahme der neutral reagierenden Epoxide sind dies ausnahmslos basische Substanzen. Bei den meisten Verfahren verbleiben die Umsetzungsprodukte von Phosphazen-Katalysator und Desaktivierungsmitteln ganz oder teilweise in den Organopolysiloxanen, nur bei dem in DE 35 33 028 A beschriebenen Verfahren werden sie entfernt.

Gegenstand der Erfindung ist ein Verfahren zum Stabilisieren von Organopolysiloxanen entsprechend der nachfolgend angeführten Definition, die Phosphazene und/oder deren die Kondensation und/oder Äquilibrierung von Organopolysiloxanen fördernden Umsetzungsprodukte enthalten, dadurch gekennzeichnet, daß die genannten Phosphorverbindungen mit mindestens einem nicht-basischen, festen Adsorbens ausgewählt aus Aktivkohlen, Rußen, Kieselgelen oder Bleicherden in Kontakt gebracht werden.

Nach dem erfindungsgemäßen Verfahren können Organopolysiloxane, die Phosphazene und/oder deren Umsetzungsprodukte enthalten, gegenüber Umlagerungen sowie Molekulargewichtsveränderungen und damit einhergehenden Viskositätsänderungen stabilisiert werden.

Es handelt sich bei den Organopolysiloxanen, die erfindungsgemäß stabilisiert werden, um solche der allgemeinen Formel

$$X(SiR_2O)_n SiR_2X \qquad\qquad (I),$$

wobei

R gleich oder verschieden sein kann und Wasserstoffatom oder SiC-gebundene, einwertige, gegebenenfalls substituierte Kohlenwasserstoffreste bedeutet, mit der Maßgabe, daß ein jedes Siliciumatom höchstens ein Si-gebundenes Wasserstoffatom aufweist,

X gleich oder verschieden sein kann und Hydroxylgruppe, Chlor oder die Gruppe $-OSiR_aR^1_{3-a}$ bedeutet mit R gleich einer der oben angegebenen Bedeutungen, $R^1$ gleich einwertiger, über Sauerstoff an Silicium gebundener, gegebenenfalls substituierter Kohlenwasserstoffrest und a gleich 0, 1, 2 oder 3 und

n eine ganze Zahl von mindestens 4 ist.

Obwohl durch die häufig verwendete Formel nicht dargestellt, können bis zu 5 Molprozent der Diorganosiloxaneinheiten durch andere, meist jedoch nur als mehr oder weniger schwer vermeidbare Verunreinigungen vorliegende Siloxaneinheiten, wie $RSiO_{3/2}$- und/oder $SiO_{4/2}$-Einheiten, ersetzt sein, wobei R die vorstehend dafür angegebene Bedeutung hat.

Beispiele für Reste R sind Alkylreste, wie der Methyl-, Ethyl-, n-Propyl-, iso-Propyl-, n-Butyl- und sec.-Butylrest, Alkenylreste, wie der Vinyl- und der Allylrest, Arylreste, wie der Phenylrest, Alkarylrest, wie Tolyl- und Xylylreste, und Aralkylreste, wie der Benzylrest.

Beispiele für einwertige, substituierte Kohlenwasserstoffreste R sind Cyanalkylreste, wie der β-Cyanethylrest, Halogenalkylreste, wie der 3,3,3-Trifluorpropylrest, und Halogenarylreste, wie o-, m- und p-Chlorphenylreste.

Wegen der leichten Zugänglichkeit sind vorzugsweise mindestens 50 % der Anzahl der Reste R Methylreste, wobei die verbleibenden Reste R vorzugsweise Vinyl- und/oder Phenylreste sind. Außerdem kann auch die Anwesenheit von Si-gebundenem Wasserstoff bevorzugt sein.

Beispiele für Reste $R^1$ sind der Methoxy-, Ethoxy- und Methoxyethylenoxyrest ($CH_3OCH_2CH_2O-$) sowie durch Reste R substituierte Phenoxyreste.

Die Viskosität der Organopolysiloxane, gegenüber deren Änderung die Organopolysiloxane stabilisiert werden können, beträgt vorzugsweise 2 bis 10 000 $mm^2$/s bei einer Temperatur von 25°C, besonders bevorzugt 10 bis 5 000 $mm^2$/s.

Die größte Bedeutung hat das erfindungsgemäße Verfahren für solche Organopolysiloxane der Formel (I), worin X Wasserstoff oder ein Rest der Formel $-SiR_3$, wie der Trimethylsilyl-, Dimethylvinylsilyl- oder Dimethylhydrogensilylrest ist, oder ein Teil der X Wasserstoff bedeutet und die übrigen X Reste der Formel $-SiR_3$ bedeuten.

Nach dem erfindungsgemäßen Verfahren kann eine Art von Organopolysiloxan oder ein Gemisch aus mindestens zwei verschiedenen Arten von Organopolysiloxanen stabilisiert werden.

Bei den Phosphazenen, welche die Organopolysiloxane, die erfindungsgemäß gegenüber Viskositätsänderungen stabilisiert werden, enthalten, kann es sich um beliebige, bisher zur Förderung von Kondensation und/oder Äquilibrierung von Organosiliciumverbindungen, die Si-gebundenen Sauerstoff aufweisen, einsetzbare Phosphazene handeln.

Beispiele für solche Phosphazene sind solche, die durch Umsetzung von 2 Mol Phosphorpentachlorid mit 1 Mol Ammoniumchlorid erhältlich sind, wie etwa aus US 3,839,388 A (ausgegeben am 1. Oktober 1974, Wacker-Chemie GmbH) bekannt, oder solche gemäß der deutschen Anmeldung mit dem Aktenzeichen P 43 17 909.6 (R. Hager, Wacker-Chemie GmbH; angemeldet am 28. Mai 1993) oder siliciumhaltige Phosphazene, wie sie aus DE 37 25 377 A (offengelegt am 9. Februar 1989, Wacker-Chemie GmbH) und der deutschen Anmeldung mit dem Aktenzeichen P 43 17 978.9 (R. Hager, Wacker-Chemie GmbH; angemeldet am 28. Mai 1993) bekannt sind.

Ob die über Phosphazen-geförderte Kondensation und/oder Äquilibrierung hergestellten Organopolysiloxane noch größtenteils unveränderte Phosphazene enthalten oder überwiegend Umsetzungsprodukte der Phosphazene mit den Siloxanen, Siloxanolen oder Nebenbestandteilen, wie beispielsweise Wasser, hängt von der Art der eingesetzten Phosphazene, der Art der Siloxanausgangsverbindungen und von den Reaktionsbedingungen ab.

Eine allgemeingültige Beschreibung derartiger Umsetzungsprodukte ist im allgemeinen nicht möglich. Grundsätzlich besitzen die Umsetzungsprodukte eine vergleichbare Fähigkeit, Kondensations- und/oder Äquilibrierungsreaktionen von Organopolysiloxanen zu fördern, wie die ursprünglich eingesetzten Phosphazene.

Die Herstellung von Phosphazene und deren die Kondensation und/oder Äquilibrierung ebenfalls fördernde Umsetzungsprodukte enthaltenden Organopolysiloxanen ist allgemein bekannt und beispielsweise in der obengenannten US 3,330,388 A, DE 42 05 201 A (offengelegt am 27. August 1992, Dow Corning S. A.), US 5,210,129 A (ausgegeben am 11. Mai 1993, Dow Corning S. A.), den oben zitierten DE 37 25 377 A, P 43 17 909.6, P 43 17 978.9 beschrieben.

Die Organopolysiloxane, die durch das erfindungsgemäße Verfahren stabilisiert werden, enthalten Phosphazene und/oder deren Umsetzungsprodukte vorzugsweise in Mengen von 1 bis 500 Gew.-ppm, besonders bevorzugt 3 bis 200 Gew.-ppm, jeweils bezogen auf das Gesamtgewicht der Phosphorverbindungen enthaltenden Organopolysiloxane.

Bei dem erfindungsgemäßen Verfahren werden als nicht-basische Adsorbentien Aktivkohlen, Ruße, Kieselgele und Bleicherden eingesetzt, wobei Aktivkohle besonders bevorzugt ist.

Bei dem erfindungsgemäß eingesetzten Adsorbens kann es sich um eine einzelne Art wie auch um ein Gemisch verschiedener Arten derartiger Adsorbentien handeln.

Sobald die genannten Phosphorverbindungen mit den Adsorbentien in Kontakt kommen, besitzen sie nur noch verminderte oder keine die Kondensation und/oder Äquilibrierung von Organosiliciumverbindungen fördernde Wirkung mehr.

Das erfindungsgemäße Verfahren kann sowohl absatzweise wie auch kontinuierlich oder halbkontinuierliche durchgeführt werden.

Bei dem erfindungsgemäßen Verfahren können nun die zu stabilisierenden, Phosphorverbindung enthaltenden Organopolysiloxane mit den Adsorbentien in unterschiedlicher Art und Weise in Kontakt gebracht werden.

**Verfahrensvariante A**

Bei dieser Verfahrensvariante werden die zu stabilisierenden, Phosphorverbindung enthaltenden Organopolysiloxane mit den Adsorbentien versetzt, die Adsorbentien mit den Organopolysiloxanen, z.B. durch Rühren, bevorzugt homogen vermischt und anschließend die mit Phosphorverbindung beladenen Adsorbentien von den Organopolysiloxanen abgetrennt.

Die Kontaktzeit von den zu stabilisierenden Organopolysiloxanen mit den Adsorbentien, d.h. die Zeit von der Adsorbenszugabe bis zum Abtrennen der mit Phosphorverbindung beladenen Adsorbentien, beträgt vorzugsweise 5 Minuten bis 5 Stunden, besonders bevorzugt 10 Minuten bis 3 Stunden.

Die Abtrennung der mit Phosphorverbindung beladenen Adsorbentien erfolgt bevorzugt durch Filtration oder Zentrifugation.

Die auf diese Weise behandelten Organopolysiloxane sind praktisch vollständig frei von Phosphazenen und ihren Folgeprodukten.

Bei den eingesetzten Adsorbentien handelt es sich dabei um solche mit einem Partikeldurchmesser von vorzugsweise 1 µm bis 5 mm, besonders bevorzugt 20 µm bis 1 mm. Die im erfindungsgemäß eingesetzten Adsorbentien haben eine spezifische Oberfläche von vorzugsweise mindestens $10^4$ m$^2$/kg, besonders bevorzugt mindestens $10^5$ m$^2$/kg, jeweils gemessen nach der BET-Methode.

Bei der erfindungsgemäßen Verfahrensvariante A werden die Adsorbentien bevorzugt in Mengen von 0,005 bis 5 Gew.-%, besonders bevorzugt 0,01 bis 2 Gew.-%, jeweils bezogen auf das Gesamtgewicht der Phosphorverbindungen enthaltenden Organopolysiloxane, eingesetzt.

Die erfindungsgemäße Verfahrensvariante A wird vorzugsweise bei einer Temperatur von 0 bis 200 °C, insbesondere Raumtemperatur bis 120 °C, und einem Druck von vorzugsweise 900 bis 1100 hPa durchgeführt. Es können jedoch auch höhere oder niedrigere Drücke angewendet werden.

**Verfahrensvariante B**

Bei dieser Verfahrensvariante werden die zu stabilisierenden, Phosphorverbindung enthaltenden Organopolysiloxane durch eine Filterschicht filtriert, die ein Adsorbens enthält oder mit einem Adsorbens belegt ist. Die so behandelten Organopolysiloxane sind dann ebenfalls frei von Phosphazenbestandteilen.

Als Adsorbens können bei dieser Variante alle oben genannten Adsorbentien eingesetzt werden.

Die Adsorbensmenge auf dem Filter beträgt vorzugsweise 0,01 bis 10 g/m$^2$, besonders bevorzugt 0,1 bis 5 g/m$^2$.

Bei der erfindungsgemäßen Verfahrensvariante B enthält der eingesetzte Filter Adsorbentien bevorzugt in Mengen von 0,01 bis 5 Gew.-%, besonders bevorzugt 0,05 bis 2 Gew.-%, jeweils bezogen auf das Gesamtgewicht der Phosphorverbindungen enthaltenden Organopolysiloxane.

Die erfindungsgemäße Verfahrensvariante B wird vorzugsweise bei einer Temperatur von 0 bis 200 °C, insbesondere Raumtemperatur bis 120 °C, durchgeführt.

Das erfindungsgemäße Verfahren, d.h. sowohl Verfahrensvariante A wie auch Verfahrensvariante B, haben den großen Vorteil, daß eine praktisch vollständige Entfernung der Phosphazene und deren die Kondensation und/oder Äquilibrierung ebenfalls fördernden Umsetzungsprodukte aus Organopolysiloxanen auf eine einfache und sehr schonende Weise ermöglicht wird, ohne daß basische oder sonstige gegenüber den Phosphazenen reaktive Substanzen eingesetzt werden müssen. Das erfindungsgemäße Stabilisierungsverfahren hat des weiteren den Vorteil, daß unter dem Einfluß des Adsorbens keine Veränderungen am Organopolysiloxan auftreten.

Die erfindungsgemäß stabilisierten Organopolysiloxane können für alle Zwecke eingesetzt werden, bei denen auch die nach bisher bekannten Verfahren stabilisierten Organopolysiloxane eingesetzt werden konnten, wie z.B. für Pflegemittel und kosmetische Rezepturen, als Fadengleitmittel, zur Herstellung von Organopolysiloxanelastomeren und zur Herstellung von klebrige Stoffe abweisenden Überzügen. Zusätzlich eignen sich die erfindungsgemäß stabilisierten Organopolysiloxane als Transformatorenöle, elektrisch isolierende Öle und als Ausgangsstoffe für elektrisch isolierenden Silikonkautschuk, beispielsweise zur Anwendung in der Elektrotechnik.

In den nachstehend beschriebenen Beispielen beziehen sich alle Angaben von Teilen und Prozentsätzen, falls nicht anders angegeben, auf das Gewicht. Sofern nicht anders angegeben, werden die nachstehenden Beispiele bei einem Druck der umgebenden Atmosphäre, also etwa bei 1000 hPa, und bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt.

Im folgenden beziehen sich alle Viskositätsangaben auf eine Temperatur von 25°C.

**Beispiel 1**

Ein Gemisch aus 208 g (1 Mol) PCl$_5$ und 26,7 g (0,5 Mol) NH$_4$Cl in 160 ml 1,2,3-Trichlorpropan wurde 5 Stunden bei 155 °C gerührt. Nach Abkühlung auf Raumtemperatur wurden innerhalb von 2 Stunden 7,5 ml Wasser zu der hellgelben Lösung dosiert. Anschließend wurden die flüchtigen Anteile bei maximal 100 °C und einem Druck von 1 hPa entfernt. Als Rückstand verbleiben 95 g einer gelbbraunen öligen Flüssigkeit der Dichte 1,8 g/ml, die im wesentlichen aus den Verbindungen PCl$_3$=N-PCl$_2$=N-PCl$_2$O und PCl$_3$=N(-PCl$_2$=N)$_2$-PCl$_2$O besteht. Um die eingesetzten geringen Mengen exakt dosieren zu können, wurde eine 10 %ige Lösung des so erhaltenen Phosphazengemisches in Ethylacetat zubereitet.

In einem Kolben mit Rührer werden 240 g α,ω-Bis(trimethylsiloxy)polymethylhydrogensiloxan einer Viskosität von 25 mm²/s und 100 g α,ω-Bis(trimethylsiloxy)polydimethylsiloxan einer Viskosität von 350 mm²/s bei 120 °C mit 0,35 ml der oben beschriebenen Phosphazenlösung versetzt und bei dieser Temperatur 10 Minuten gerührt.

Nach Abkühlung auf Raumtemperatur wird in die Reaktionsmischung 1 g Aktivkohle mit einer spezifischen Oberfläche (nach BET) von 800 m²/g (käuflich erhältlich unter der Bezeichnung "Aktivkohle rein" bei Merck-Schuchardt) eingerührt. Nach 30 Minuten ab Aktivkohlenzusatz wird über eine Glasfritte mit einem Durchmesser von 6,5 cm filtriert. Das so erhaltene Organopolysiloxan ist ein farbloses, klares Öl einer Viskosität von 35 mm²/s und besitzt die durchschnittliche Zusammensetzung $Me_3Si[OSiMe_2]_{35}[OSiMeH]_{15}OSiMe_3$. Das Produkt ist pH-neutral und verändert seine Viskosität auch bei einstündigem Erhitzen auf 180 °C nicht.

Zur Bestimmung des Phosphorgehalts wurden 100 g Organopolysiloxan mit 100 ml entionisiertem Wasser 1 Stunde bei 80 °C intensiv durchmischt, anschließend die Phasen getrennt und die Wasserphase einer ICP-Messung (Atomemissionsspektroskopie) unterworfen. Der Phosphorgehalt liegt unter der Nachweisgrenze von 0,2 mg/kg Prüfsubstanz. Es sind folglich keine Phosphorverbindungen im Produkt enthalten.

**Beispiel 2**

Eine Mischung von 1000 g eines α,ω-Dihydroxypolydimethylsiloxans mit einer Viskosität von ca. 120 mm²/s und 125 g eines α,ω-Divinylpolydimethylsiloxans mit einer Viskosität von 30 mm²/s wird bei 120 °C mit 0,15 ml der in Beispiel 1 beschriebenen Phosphazenlösung versetzt. Anschließend wird der Druck im Reaktionsgefäß auf 1 hPa reduziert und unter diesen Bedingungen 30 Minuten gerührt. Jetzt wird die Heizquelle entfernt und der Druck im Reaktionsgefäß wieder dem atmosphärischen Umgebungsdruck angeglichen.

Sobald das Reaktionsgemisch auf eine Temperatur von ca. 50 °C abgekühlt ist, wird es über eine Glasfritte mit einem Durchmesser von 6,5 cm filtriert, die mit ca. 0,1 g Aktivkohle mit einer spezifischen Oberfläche (nach BET) von 800 m²/g (käuflich erhältlich unter der Bezeichnung "Aktivkohle rein" bei Merck-Schuchardt) pro cm² Filterfläche belegt ist. Das Filtrat ist ein α,ω-Divinylpolydimethylsiloxan mit einer Viskosität von 880 mm²/s. Es ist klar, pH-neutral und verändert seine Viskosität bei einstündigem Erhitzen auf 180 °C nicht.

Nach der in Beispiel 1 beschriebenen Verfahrensweise wurde nun mittels ICP-Messung der Phosphorgehalt ermittelt. Demnach liegt der Phosphorgehalt unter 0,2 mg pro kg Prüfsubstanz. Die Phosphazene und ihre Umsetzungsprodukte sind also vollständig entfernt worden.

**Beispiel 3**

In einem Kolben mit Rührer werden 1200 g α,ω-Bis(trimethylsiloxy)polymethylhydrogensiloxan einer Viskosität von 25 mm²/s und 500 g α,ω-Bis(trimethylsiloxy)polydimethylsiloxan einer Viskosität von 350 mm²/s bei 120 °C mit 1,75 ml der in Beispiel 1 beschriebenen Phosphazenlösung versetzt und bei dieser Temperatur 10 Minuten gerührt.

Nach Abkühlung auf Raumtemperatur wird das so erhaltene Organopolysiloxan der durchschnittlichen Zusammensetzung $Me_3Si[OSiMe_2]_{35}[OSiMeH]_{15}OSiMe_3$ in vier Fraktionen von jeweils 300 g über eine Glasfritte mit einem Durchmesser von 6,5 cm filtriert, die zuvor mit 1 g Aktivkohle mit einer spezifischen Oberfläche (nach BET) von 800 m²/s (käuflich erhältlich unter der Bezeichnung "Aktivkohle rein" bei Merck-Schuchardt) belegt worden ist.

Nach Filtration einer jeden Fraktion wird der Phosphorgehalt sowie der Säuregehalt der jeweiligen Fraktion bestimmt. Die Ergebnisse finden sich in Tabelle 1. Der Phosphorgehalt (Angabe in ppm, d.h. mg Phosphor pro kg Siloxan) wurde nach der in Beispiel 1 beschriebenen Verfahrensweise mittels ICP-Messung ermittelt. Der Säuregehalt wurde durch Titration mit Natronlauge bestimmt, wobei sich die Angabe in ppm (mg HCl/kg Siloxan) wie folgt errechnet:

$$\text{Säuregehalt (ppm)} = \frac{\mu\text{Val NaOH x } 36,46}{\text{Siloxan-Einwaage (g)}}$$

Tabelle 1

| Fraktion | Säuregehalt (ppm) | Phosphorgehalt (ppm) |
|----------|-------------------|----------------------|
| 1 | 0 | < 0,2 |
| 2 | 0 | < 0,2 |
| 3 | 1,6 | 1,2 |
| 4 | 2,2 | 1,7 |

Unter den in Beispiel 3 gewählten Bedingungen reicht 1 g Aktivkohle, um die Phosphazene bzw. deren Umsetzungsprodukte aus mehr als 600 g des Organopolysiloxans vollständig oder zumindest nahezu vollständig zu entfernen.

**Beispiel 4**

Die Umsetzung von 1200 g $\alpha,\omega$-Bis(trimethylsiloxy)polymethylhydrogensiloxan, 500 g $\alpha,\omega$-Bis(trimethylsiloxy)polydimethylsiloxan und 1,75 ml der Phosphazenlösung wurde analog der in Beispiel 3 beschriebenen Verfahrensweise insgesamt dreimal wiederholt und die Produktchargen anschließend vereinigt. In Fraktionen von jeweils 500 g wird das so erhaltene Organopolysiloxan der durchschnittlichen Zusammensetzung $Me_3Si[OSiMe_2]_{35}[OSiMeH]_{150}SiMe_3$ über ein aktivkohlenhaltiges Tiefenfilter mit einem Durchmesser von 14 cm (käuflich erhältlich unter der Bezeichnung "Seitz-Tiefenfilter AKS4-14D" bei der Fa. Seitz) filtriert.

Nach Filtration einer jeden Fraktion wird der Phosphorgehalt sowie der Säuregehalt der jeweiligen Fraktion wie in Beispiel 3 beschrieben bestimmt. Die Ergebnisse finden sich in Tabelle 2.

Tabelle 2

| Fraktion | Säuregehalt (ppm) | Phosphorgehalt (ppm) |
|---|---|---|
| 1 | 0 | < 0,2 |
| 2 | 0 | < 0,2 |
| 3 | 0 | < 0,2 |
| 4 | 0 | < 0,2 |
| 5 | 1,8 | 1,4 |

Unter den in Beispiel 4 gewählten Bedingungen sind auch bei 2000 g Siloxan noch keine Phosphazenbestandteile im Filtrat nachweisbar; erst bei 2500 g werden Säure- und Phosphorspuren detektiert.

**Patentansprüche**

1. Verfahren zum Stabilisieren von Organopolysiloxanen der allgemeinen Formel

$$X(SiR_2O)_nSiR_2X \hspace{4cm} (I),$$

wobei

R gleich oder verschieden sein kann und Wasserstoffatom oder SiC-gebundene, einwertige, gegebenenfalls substituierte Kohlenwasserstoffreste bedeutet, mit der Maßgabe, daß ein jedes Siliciumatom höchstens ein Si-gebundenes Wasserstoffatom aufweist,

X gleich oder verschieden sein kann und Hydroxylgruppe, Chlor oder die Gruppe $-OSiR_aR^1_{3-a}$ bedeutet mit R gleich einer der oben angegebenen Bedeutungen, $R^1$ gleich einwertiger, über Sauerstoff an Silicium gebundener, gegebenenfalls substituierter Kohlenwasserstoffrest und

a gleich 0, 1, 2 oder 3 und

n eine ganze Zahl von mindestens 4 ist,

die Phosphazene und/oder deren die Kondensation und/oder Äquilibrierung von Organopolysiloxanen fördernden Umsetzungsprodukte enthalten, dadurch gekennzeichnet, daß die genannten Phosphorverbindungen mit mindestens einem nicht-basischen, festen Adsorbens ausgewählt aus Aktivkohlen, Ruße, Kieselgele und Bleicherden in Kontakt gebracht werden.

2. Verfahren nach Anspruch 1, dadurch gekennzeichnet, daß als nicht-basische Adsorbentien Aktivkohlen eingesetzt werden.

3. Verfahren nach Anspruch 1 oder 2, dadurch gekennzeichnet, daß die zu stabilisierenden, Phosphorverbindung enthaltenden Organopolysiloxane mit den Adsorbentien versetzt werden und anschließend die mit Phosphorverbindung beladenen Adsorbentien von den Organopolysiloxanen abgetrennt werden.

**4.** Verfahren nach Anspruch 3, dadurch gekennzeichnet, daß die Adsorbentien in Mengen von 0,005 bis 5 Gew.-%, bezogen auf das Gesamtgewicht der Phosphorverbindungen enthaltenden Organopolysiloxane, eingesetzt werden.

**5.** Verfahren nach Anspruch 1 oder 2, dadurch gekennzeichnet, daß die zu stabilisierenden, Phosphorverbindung enthaltenden Organopolysiloxane durch eine Filterschicht filtriert werden, die ein Adsorbens enthält oder mit einem Adsorbens belegt ist.

**6.** Verfahren nach Anspruch 5, dadurch gekennzeichnet, daß der eingesetzte Filter Adsorbentien in Mengen von 0,01 bis 5 Gew.-%, bezogen auf das Gesamtgewicht der Phosphorverbindungen enthaltenden Organopolysiloxane, aufweist.

## Claims

**1.** Process for stabilizing organopolysiloxanes of the general formula

$$X(SiR_2O)_nSiR_2X \qquad (I),$$

where

R  can be identical or different on each appearance and is a hydrogen atom or a SiC-bonded, monovalent, unsubstituted or substituted hydrocarbon radical, with the proviso that each silicon atom has at most one Si-bonded hydrogen atom,

X  can be identical or different on each appearance and is a hydroxyl group, chlorine or the group $-OSiR_aR^1_{3-a}$ where R has one of the meanings given above, $R^1$ is a monovalent, unsubstituted or substituted hydrocarbon radical bonded to silicon via oxygen and

a  is 0, 1, 2 or 3 and

n  is an integer of at least 4,

which contain phosphazenes and/or their reaction products which promote the condensation and/or equilibration of organopolysiloxanes, characterized in that the specified phosphorus compounds are brought into contact with at least one non-basic solid adsorbent selected from the group consisting of activated carbons, carbon blacks, silica gels and Fuller's earths.

**2.** Process according to Claim 1, characterized in that the non-basic adsorbents used are activated carbons.

**3.** Process according to Claim 1 or 2, characterized in that the organopolysiloxanes which contain phosphorus compounds and are to be stabilized are treated with the adsorbents and the adsorbents loaded with phosphorus compounds are subsequently separated off from the organopolysiloxanes.

**4.** Process according to Claim 3, characterized in that the adsorbents are used in amounts of from 0.005 to 5% by weight, based on the total weight of the organopolysiloxanes containing phosphorus compounds.

**5.** Process according to Claim 1 or 2, characterized in that the organopolysiloxanes which contain phosphorus compounds and are to be stabilized are filtered through a filter bed which contains an adsorbent or is covered with an adsorbent.

**6.** Process according to Claim 5, characterized in that the filter used has adsorbents in amounts of from 0.01 to 5% by weight, based on the total weight of the organopolysiloxanes containing phosphorus compounds.

## Revendications

**1.** Procédé de stabilisation d'organopolysiloxanes de formule générale

$$X(SiR_2O)_nSiR_2X \qquad\qquad (I),$$

où

R peut être identique ou différent et représente un atome d'hydrogène ou un radical hydrocarbure à liaison SiC, monovalent, facultativement substitué, avec la condition que chacun des atomes de silicium présente au moins un atome d'hydrogène à liaison Si;
X peut être identique ou différent et représente un groupe hydroxyle, le chlore ou le groupe -$OSiR_aR^1_{3-a}$, où R est semblable à une des significations données ci-dessus, $R^1$ est un radical hydrocarbure monovalent, lié au silicium par un oxygène, facultativement substitué, et
a est 0, 1, 2 ou 3, et
n est un nombre entier d'au moins 4,

qui contiennent des phosphazènes et/ou leurs produits de réaction accélérant la condensation et/ou l'équilibrage des organopolysiloxanes, caractérisé en ce que les composés phosphorés cités sont mis en contact avec au moins un adsorbant solide, non basique, choisi parmi le carbone actif, le noir de carbone, le gel de silice et la terre décolorante.

2.  Procédé suivant la revendication 1, caractérisé en ce que l'on utilise le carbone actif comme adsorbant non basique.

3.  Procédé suivant la revendication 1 ou 2, caractérisé en ce que l'on additionne aux organopolysiloxanes à stabiliser, contenant les composés phosphorés, les adsorbants et ensuite, on sépare les adsorbants chargés des composés phosphorés des organopolysiloxanes.

4.  Procédé suivant la revendication 3, caractérisé en ce que l'on utilise les adsorbants en des quantités de 0,005 à 5% en poids, sur base du poids total des organopolysiloxanes contenant les composés phosphorés.

5.  Procédé suivant la revendication 1 ou 2, caractérisé en ce que les organopolysiloxanes à stabiliser, contenant les composés phosphorés, sont filtrés sur une couche filtrante qui contient un adsorbant ou est recouvert d'un adsorbant.

6.  Procédé suivant la revendication 5, caractérisé en ce que le filtre utilisé présente les adsorbants en des quantités de 0,01 à 5% en poids, sur base du poids total des organopolysiloxanes contenant les composés phosphorés.